Europäisches Patentamt

European Patent Office

Office européen des brevets

(19)

(11) Publication number: **0 095 004**
**A2**

(12) # EUROPEAN PATENT APPLICATION

(21) Application number: **82305592.6**

(22) Date of filing: **21.10.82**

(51) Int. Cl.³: **F 16 B 11/00**
**B 68 G 7/00, A 47 C 27/00**

(30) Priority: **27.10.81 IT 955581**

(43) Date of publication of application:
**30.11.83 Bulletin 83/48**

(84) Designated Contracting States:
**AT BE CH DE FR GB LI NL**

(71) Applicant: **PERMAFLEX S.p.A.**
**Via Cristoforo Colombo 456**
**Rome(IT)**

(72) Inventor: **Mariani, Nunzio**
**Via Virgilio Ramperti 31**
**Rome(IT)**

(72) Inventor: **Gori, Enzo**
**Via Alfredo Catalani 5**
**Pistola(IT)**

(72) Inventor: **Santarini, Luigi**
**Via Livornese 258/B**
**Port A Mare Pisa(IT)**

(74) Representative: **Corin, Christopher John et al,**
**Mathisen Macara & Co. Lyon House Lyon Road**
**Harrow Middx. HA1 2ET(GB)**

(54) Spring mattresses.

(57) A method and apparatus for connecting together porous layers of a spring mattress structure are described. A film of plastics material (12) which plasticises at a low temperature is interposed between the layers (5, 7) to be joined, and, at a convenient stage in the construction of the mattress, hot air is delivered to the film so as to plasticize it and thereby join the layers (5, 7).

Fig.2

EP 0 095 004 A2

Croydon Printing Company Ltd

## SPRING MATTRESSES

The present invention relates to the manufacture of mattresses, such as spring mattresses, which comprise multiple layers of material such as expanded resin, quilted fabric and felt. These multiple layers are normally disposed on either side of a metal spring structure or other resilient structure and must be mounted in such a manner as to be free of relative slipping between the respective layers in order to ensure a longer life for the mattress, or, alternatively, allow cheaper materials to be used in the layers without reducing the normal life of the mattress. The connection is also required to ensure positional stability of the various components of the mattress during use.

In traditional methods, fixing is effected by sewing tie elements through buttons on the surface which have to be mostly positioned by hand or by using equipment of considerable complexity. Moreover such buttons can prove very annoying to the person lying on the mattress.

In other known constructions, the various layers are fixed only along the mattress perimeter, with the result that weakness exists in the centre, especially in the case of double bed mattresses.

0095004

In other known constructions, various layers are connected together by disposing therebetween a thermofusible and thermoshrinkable film able to melt at a relatively low temperature (of the order of $100^o$-$120^o$C). After assembling the mattress it is subjected to heat treatment so as to cause said film disposed between component layers to attain its plasticising temperature and thus connect together these layers of the mattress. The process is generally carried out in an oven by radiation and conduction. This process is costly and damaging to the component materials of the mattress because the temperatures of plates which are brought into contact with the outer surfaces of the mattress, or the surrounding temperature must be significatnly higher than the temperature required for plasticising the bonding film. The thermoshrinkability of the films used enables a recticulated structure of the processed film to be obtained, so as to ensure air permeability and transpiration.

The present invention provides a method of making a mattress structure having adjacent porous layers comprising the steps of interposing a plastics film with a low plasticising temperature between said adjacent porous layers; and heating said film to its plasticising temperature to join said layers, characterised in that said film is heated by blowing hot gas onto said film at any stage in the construction of a mattress incorporating said structure.

The invention also provides apparatus for forming a mattress structure by the method defined above, characterised by comprising a surface having defined therein a plurality of spaced nozzles, means for moving said nozzles into and out of contact with the surface of the mattress structure, and control means for causing hot gas to be delivered from said nozzles.

The invention further provides a mattress structure including adjacent porous layers, a plastics film with a low plasticising temperature interposed between said layers, characterised in that said film has been fused to said layers at least in spaced zones to join said layers by hot gas blown onto the film.

An embodiment of the invention will now be described, by way of example only, with reference to the accompanying diagrammatic drawings in which:

Figure 1 is a cross-section through a mattress structure;

Figure 2 shows a method of the invention in operation; and

Figure 3 shows part of an apparatus for carrying out the method.

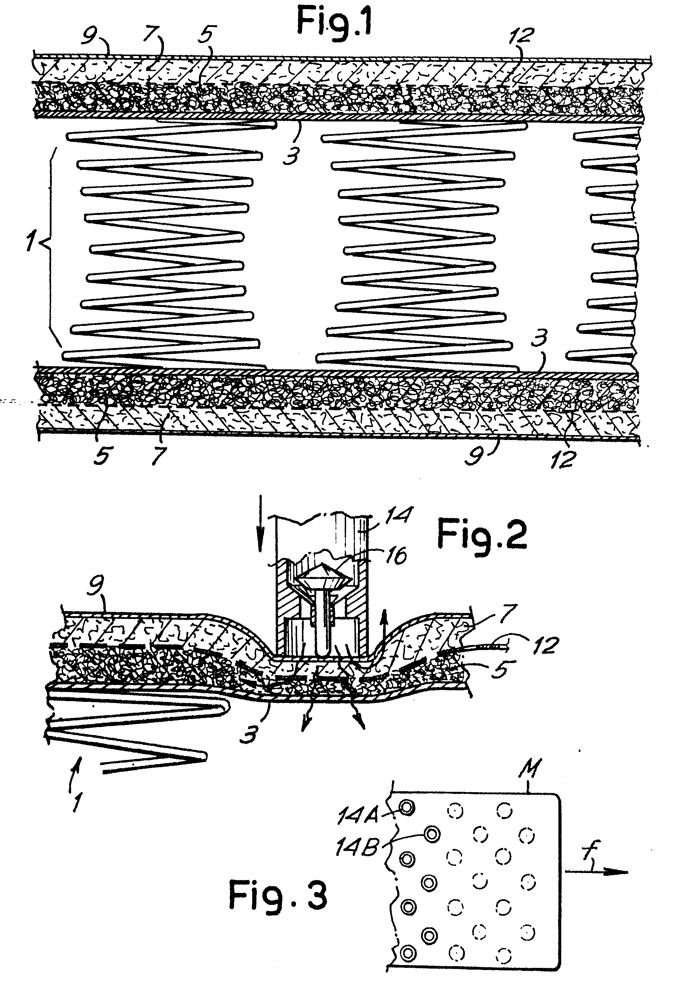

In Figure 1 of the drawings, the reference numeral 1 indicates a metal spring structure of a mattress, which

is adjoined by a layer 3 of felt or the like, which in its turn is adjoined, and possibly bonded during its manufacture, to a permeable porous layer 5 of expanded synthetic resin. On the outside of the layer 5 there is provided a composite layer, which can consist of various materials such as a quilt of natural or synthetic fibres 7, and a covering fabric 9 or the like.

The conventional method of connecting the layers together comprises overall heating of the assembled mattress, in which there is inserted a film which melts at low temperature and is disposed between the layers to be joined together, for example disposed between the layers 5 and 7. Thus on heating, said layers are joined together by the film plasticising effect. The film can be made permeable to air by the effect of thermoshrinking, permeability being required for aesthetic reasons. In order to attain plasticising temperatures, of the order of 100-120°C, in a reasonably short time within the mattress layers, which are mostly very heat-insulating, the mattress must be treated externally with much higher temperatures, this being possible only if the layer 7 is very thin, otherwise it is harmful to the external parts of the mattress.

In the present method concentrated localised heating directed specifically towards those parts to be heated, without appreciable temperature gradients is provided. Between the layers to be joined together, such as the layers 5 and 7, there is disposed a plastics film 12 which plasticises at low temperature, and which is advantageously inherently permable to air or is made permeable by being perforate or cut, for example.by punching uniformly distributed holes or slots of suitably limited dimensions and of suitable density. Concentrated heating is provided by blowing hot air through the layers 9 and 7 in order to easily reach the film 12 and induce its localised thermofusion. The hot air, which is blown in at any appropriate time during the mattress construction, is not at a particularly high temperature because it does not cool to any appreciable extent during its passage through the layers 7 and 9, this being simply attained by slight overpressure. The air temperature is typically a few degrees higher than the plasticising temperature of the bonding film 12 so as not to damage the layers 7 and 9.

Advantageously nozzles such as that shown by way of example in Figure 2 and indicated by the reference numeral 14, can be used which press to a limited extent on the mattress surface, so facilitating the passage of air through the outer layers. The excess air can be removed, either through the intermediate metal spring structure 1, or by radial diffusion about the zone subjected to the thermofusion process in order to enlarge the area of the thermofused material of the film 12 relative to the cross-sectional area of the hot air jet.

The hot air emission from a nozzle can be limited to the period in which the nozzle 14 is close to or pressing against the mattress surface. For this purpose there can also be simply provided a valve means indicated by way of example by the reference numeral 16 in Figure 2, which opens when the nozzle rests against or comes into the vicinity of the mattress surface. Blowing takes place after limited compression of the material, which itself can be effected directly by the nozzle means.

In practice a nozzle surface can be provided which comprises alternate staggered rows of nozzles 14A and 14B (see Figure 3), which cyclically withdraw from and approach a mattress M - either on one face or on the opposing faces simultaneously - there being provided a relative movement in the direction of the arrow f between the nozzle surface and the mattress, either in the form of an intermittent advancing movement or, alternatively, with the nozzle face reciprocating across the mattress. It would also be possible for several sets of axially aligned nozzles to move continuously at the periphery of a rotor having its axis transverse to the direction in which a matress is advancing, with the nozzles of the various successive rows acting during that arc of a circular trajectory which corresponds to contact with the mattress and to the possible pressing of the mattress against the valve means 16.

Rapid and simple processing is obtained with the described arrangement. Rapid heating is provided at temperatures which are kept below harmful limits. Energy consumption is reduced as heating is localised and welding times are shorter. All the mattress components can be assembled, even when the layers 7 and 9 are very thick, while still being able to make the connection with the thermofusible material practically at the end of the mattress preparation and assembly, which is almost unattainable with the prior radiation and conduction techniques. The manual operations involved are extremely limited, and the apparatus is economical and much smaller in terms of overall size than the tunnel ovens provided for overall matress heating. The discontinuous connection made by the localised thermofusion is sufficient and is similar to that obtained by using buttons (which are difficult to apply and give annoyance). Moreover, it has been found that welding with ovens is not possible unless the layers 7,9 are very thin, otherwise the materials burn; the time required is in any case very long, in that according to the present method of welding by blowing is carried out in 5-6 seconds, whereas 80-100 seconds are necessary when using the oven.

If a permeable film is required, continuous film can be perforated for the purpose. 'If an impermeable film is required, the operation is still possible because the air can in this case flow out mainly radially through the outer layers such as the layers 7 and 9, while heating can be such as to maintain at least partial impermeability. even in those zones exposed to the jets of hot gas.

## CLAIMS

1.      A method of making a mattress structure having adjacent porous layers (5,7) comprising the steps of interposing a plastics film (12) with a low plasticising temperature between said adjacent porous layers (5,7), and heating said film (12) to its plasticising temperature to join said layers (5,7)
characterised in that
said film is heated by blowing hot gas onto said film at any stage in the construction of a mattress incorporating said structure.

2.      A method according to claim 1, characterised in that the heating step includes blowing hot gas onto spaced zones of the film (12) by nozzle means (14).

3.      A method according to claim 1, characterised in that the layers (5,7) are compressed prior to said blowing of hot gas onto said film (12).

4.      Apparatus for forming a mattress structure by the method according to claim 1,
characterised by comprising a surface having defined therein a plurality of spaced nozzles (14A,14B), means for moving said nozzles (14A,14B) into and out of contact with the surface of the mattress structure (M), and control means for causing hot gas to be delivered from said nozzles (14A,14B).

5.      A mattress structure including adjacent porous layers (5,7), a plastics film (12) with a low plasticising temperature interposed between said layers (5,7), characters in that said film (12) has been fused to said layers (5,7) at least in spaced zones to join said layers (5,7) by hot gas blown onto the film (12).

6.      A mattress structure according to claim 5, characterised in that the film (12)  is permeable to air.

7.      A mattress structure according to claim 5, characterised in that the film (12) is perforate.

8.      A mattress structure according to claim 5, characterised in that the film (12) is thermoshrinkable.

1 / 1

0095004

Fig.1

Fig.2

Fig.3